# EUROPEAN PATENT SPECIFICATION

(11) **EP 1 388 287 B1**
(45) Date of publication and mention of the grant of the patent: **29.11.2006**
(21) Application number: 02425523.4
(22) Date of filing: 09.08.2002
(51) Int. Cl.: A21D 13/08, A21D 8/06, A23P 1/08

(54) **Filled bakery product and method for its production**
Gefülltes Backwarenerzeugnis und Verfahren zur Herstellung
Produit de boulangerie fourré et sa méthode de production

(43) Date of publication of application: 11.02.2004
(73) Proprietor: BARILLA G. e R. Fratelli S.p.A., 43100 Parma (IT)
(72) Inventor: Buriani, Ernesto, 42100 Reggio Emilia (IT); Calo', Guido, 43010 Carignano, Parma (IT); Torricelli, Roberto, 43100 Parma (IT); Vitali, Francesca, 20153 Milano (IT)
(74) Representative: Ferreccio, Rinaldo

(56) References cited:
- EP-A- 0 399 995
- EP-A- 0 543 628
- WO-A-01/93687
- US-A- 2 960 045
- US-A- 4 283 430

## Description

### Field of Application

The present invention broadly relates to filled bakery products, commonly referred to as "snacks", wherein the envelope and the filling develop a much appreciated crisp/ soft organoleptic contrast, such as is typical of products made up of a creamy core fill and an enfolding wafer, for example.

Although not limited to, the invention relates in particular to a sweet bakery product as above, wherein the envelope is wafer-like crisp and shaped to completely enfold a respective creamy filling in an overall configuration that may be tubular, "ravioli-like", shell-shaped, or else.

More particularly, the invention relates to a method of producing a bakery product as above on an industrial scale.

### Prior Art

Wafers or waffles are widely utilized in pastry, fashioned as cones, "cannoli", cookies, and the like, on account of their crisp and crunchy properties. In particular, they are used as eatable holders for ice or whipped cream, where their crisp friable texture provides a pleasant contrast to the soft creamy consistency of ice or whipped cream.

Wafers can be prepared from a suitable fluid dough or batter, which is first baked quickly in an oven or under a heated platen press (wafer maker) and then "typically" reduced to a desired final shape, e.g. rolled up, while still hot.

This shaping operation is to be completed at a fast rate while the baked batter is still hot, i.e. at such a temperature that allows it to remain "plastic" for hand or mechanical processing. When allowed to drop below a temperature that can be called substantially a transition temperature, the batter turns into a properly named wafer, having a "glassy" texture that is easily cracked or broken up into crumbles and, therefore, no further workable.

Examples of a crisp rolled wafer wrap and its preparation process are disclosed in US Patent 4,624,855, incorporated hereto by this reference.

Also known are tubular wafer wraps, usually in the form of small-diameter cigarette-shaped wraps which are used almost exclusively to make small crisp snack products that may optionally be filled, but not to make suitably filled snacks.

All prior methods of making filled bakery products consisting of a wafer envelope as above and a creamy filling of choice provide for the shaping and wafer-filling steps to be carried out after the baking. As previously mentioned, the wafer blanks are rolled up around a mandrel directly as they leave the oven, while the baked batter is at a high temperature and still deformable plastically, and is followed by the filling operation as soon as the baked paste changes on cooling to a crisp wafer of the desired tubular shape.

Although widely adopted, conventional methods have well-recognized shortcomings, among which is a limited selection of "shapes" that the wafer envelope can take, due to the fast rate at which the shaping must be completed; a limited selection of fillings due to the crisp wafer envelope being so frail that creamy fillings must be used which have such a "viscosity" (or flowability) for them to be pumped at very low pressures that will not harm the envelope integrity.

In addition, due to the frail nature of the wafer envelope, the latter is difficult to fill evenly, and an unevenly filled wafer envelope is easily cracked at any filling vacancies.

US patent No. 4 283 430 discloses a process for producing a tubular centerfilled food product having a baked thermoplastic shell surrounding a core of filling material, which comprises the steps of a) heating a layer of a batter with a high content of mono- and disaccharides between a pair of opposed heated moving surfaces so as to obtain a deformable thermoplastic sheet with a moisture content of no more than 5% by weight and a temperature of at least 100°C ; b) passing said sheet, while at a temperature of at least 99°C, through a forming tube to form a continuous cylindrical tube; c) filling the core of this tube with an edible viscous material; d) cooling the filled tube until the baked sheet becomes rigid and cutting the filled tube into discrete pieces.

Patent application No. WO 01/93687 discloses a filled snack comprising a tubular wafer filled with a creamy filling, obtained by filling an envelope formed by folding over wafer laps on an apparatus that comprises a forming die and a bar-shaped plug.

Patent application No. EP 0 543 628 A1 describes anisotropic, composite food products, such as e.g. filled dough products, which are ultrasonically cut using a cutting blade frequency of 10-60 kHz and a cutting blade amplitude of 20-200 µm.

### Summary of the Invention

The underlying problem of this invention is to provide a method of making a filled bakery product comprised of a crisp envelope, such as a wafer, and a creamy filling, which has functional features effective to overcome the aforementioned shortcomings of the prior art, i.e. to expand the choice of shapes for the crisp envelope, optimize envelope filling with a creamy filling, and to allow the use of creamy fillings of any desired types in any desired amounts.

The problem resolving idea is basically one of shaping, and optionally filling, the wafer before the baking step, thus imparting a respective batter manipulative and plastic deformation properties by control of its moisture content rather than its temperature as is currently done. In this way, the process for obtaining a filled bakery product that includes a wafer-like crisp, crunchy envelope is relieved of subjection to the "glass transition temperature" constraint, in the sense given to the term above, that has been limiting prior processes.

Based on this idea, said technical problem is solved by a method according to the invention comprising the steps of:
a) spreading a wafer batter into a layer 0.5 to 5 mm thick, and adjusting its moisture content to 15-30%, thereby obtaining a corresponding dough sheet that is plastically deformable and can be processed mechanically;
b) associating a filling of creamy consistency with said dough sheet;
c) shaping said dough sheet into a plastically deformable envelope adapted to enfold and retain said filling;
d) baking said envelope and its filling in an oven at 150-250°C for 15-30 seconds to provide a filled bakery product whose baked envelope of dough sheet has a moisture content of 3-8%, being typical of wafers, and upon cooling becomes as crisp and crunchy as a wafer.

Preferably, said dough sheet is obtained by heating/baking the batter layer up to a moisture content of 15-30%.

Advantageously, the filling is an anhydrous cream, optionally incorporating granulate ingredients, such as hazel nut, almond, and the like.

The degree of plasticity of a dough sheet having the above moisture content and thickness in the above range, and its resulting mechanical processability, allows said dough sheet to be fashioned into any preferred shape around the creamy filling of choice. For example, a roughly cylindrical tubular envelope, or a jewel-like or jewel setting shaped envelope/container, or a "tortello" shaped envelope can be obtained, irrespective of the size of the product to be produced and the ratio of wafer envelope to creamy filling. The shape, size and ratio are then "set" in the end product by baking followed by cooling.

Thus, for example, to produce a filled bakery product of the type under consideration with a wafer-like crisp, crunchy envelope of cylindrical tubular shape on a industrial scale, the method of this invention comprises the steps of:
a) continuously forming a thin layer of a wafer batter into a continuous web 0.5 to 5 mm thick;
b) baking said continuous batter web to provide a plastically deformable, continuous dough sheet of predetermined width with a moisture content of 15-30%;
c) continuously depositing a filling of creamy consistency onto said plastically deformable dough sheet, with said filling being spread lengthwise thereon to a smaller width than the width of said dough sheet such that at least one edge lap of the dough sheet is left uncovered by said filling;
d) rolling up said dough sheet into a continuous tubular envelope enfolding said filling by continually upturning said at least one edge lap and vaulting it over said filling;
e) further baking said envelope and the filling therein in an oven at 150-250°C for 15-30 seconds, to provide a tubular filled blank of substantially cylindrical shape in which the envelope has a moisture content of 3-8%, as is typical of wafer;
f) cutting said blank across to provide blank cuttings of predetermined lengths that will form said filled bakery products.

If desired, said substantially cylindrical continuous tubular blank and its filling may additionally be shaped, e.g. fashioned into a slightly flattened substantially parallelepipedic shape, while still hot, before cutting it up as described above.

Preferably, the batter is laid as a thin layer onto a conveyor that will move it through the various processing stations of the inventive method.

The dough sheet is rolled into the continuous tubular envelope with the aid of conventional stationary shares or rotary cone lappers acting on at least one side of the dough sheet to continuously upturn the corresponding edge lap thereof left uncovered by the filling and vaulting it over said filling to contact the opposite edge lap of the dough sheet.

It should be noted that, unlike known methods, the method of this invention does not provide for a wafer to be filled and shaped as such, but rather steps of filling and shaping a hot dough sheet obtained from a wafer-batter that has a moisture content and consistency effective to impart a high degree of plastic deformability and machinability. This allows the above filling and shaping steps to be carried out continuously and easily on an industrial scale, at no risk of cracking the envelope.

It is only during the final step of fast baking that the wrap, upon being cooled below said "glass transition" temperature, takes the typical properties of a wafer and the desired crispness, at which stage the consequent friability is no longer a problem.

The advantages and features of the invention should become understood from a description of an embodiment of the inventive method for obtaining filled bakery products with a wafer envelope of tubular shape. The description should be read in conjunction with the accompanying exemplary and non-limitative drawings.

### Brief Description of the Drawings

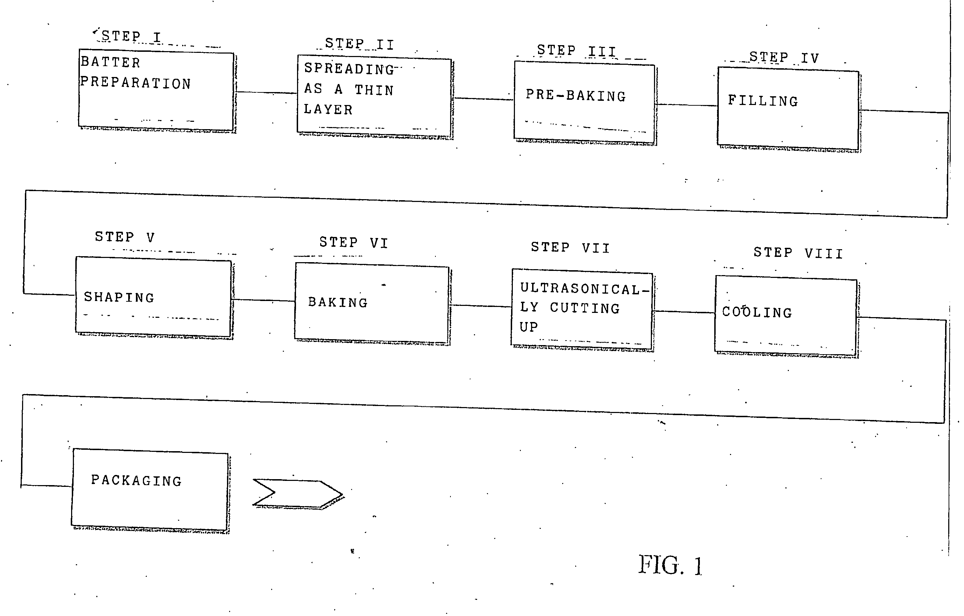

Figure 1 is a block diagram illustrating the method of this invention, as employed to obtain filled bakery product with a tubular envelope.
Figure 2 is a perspective view of a filled bakery product with a tubular wafer envelope, as obtained by the method of Figure 1.
Figures 3 to 5 are schematic perspective views of details of an apparatus implementing the method of Figure 1.
Figures 6 to 9 show schematically different shapes of the filled bakery product obtained by the method of this invention.

### Detailed Description

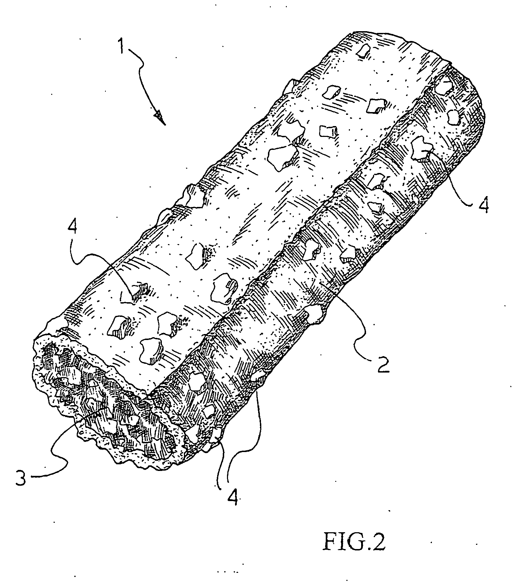

With reference to the drawings, a method according to this invention for producing a filled bakery product 1 will be described, the product 1 comprising (Figure 2) an envelope 2, specifically a tubular crisp envelope similar to a traditional wafer, and an anhydrous creamy filling 3.

In a preferred non-limitative embodiment, said tubular envelope 2 is slightly flattened, substantially into a parallelepipedon with rounded corners. Preferably, the length of the filled bakery product of this invention is in the range of 100 mm, and its thickness in the range of 15 mm, so that it can fit in one's pocket.

The method for continuously producing said filled bakery product 1 on an industrial scale starts with the preparation (step I) of a wafer-batter on a conventional planetary mixer, for example, from which said batter will be pumped continuously into a hopper 5.

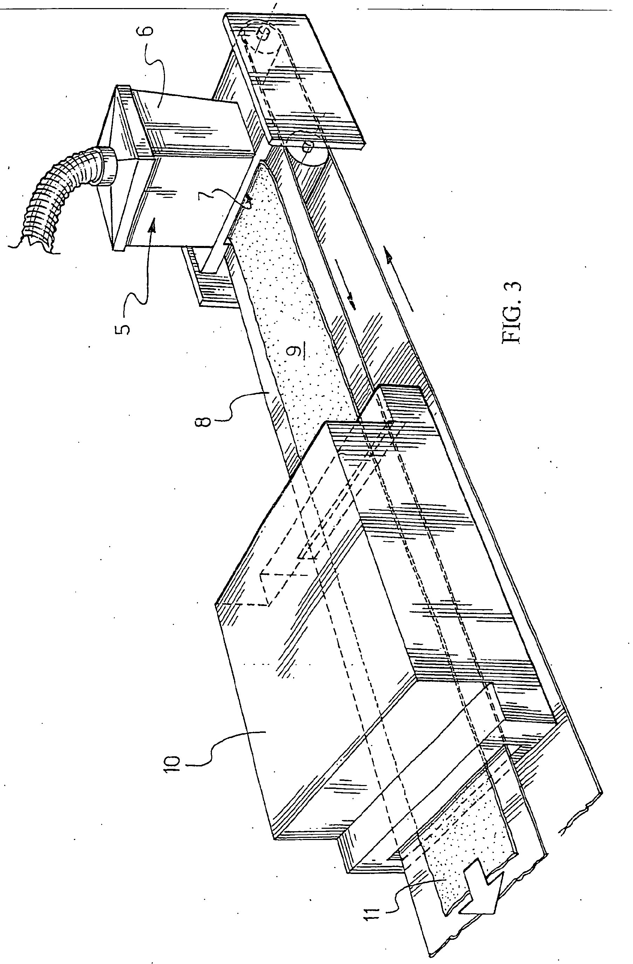

Said hopper 5 (Figure 3) comprises basically a reservoir 6 of a given capacity which includes a means, not shown, for keeping said batter stirred gently.

From an adjustable port 7 located near the bottom of the reservoir 6, the batter issues continuously (step II) onto a transport 8 as a thin layer, such that a continuous web 9 of wafer batter is formed which has a corresponding thickness and predetermined breadth.

According to one characteristic of this invention, the thickness of said continuous wafer batter web is in the range of 0.5 to 5 mm, preferably 0,5 to 2.5 mm.

The transport 8 is supported and driven conventionally to take the continuous batter web 9 through all the processing stations of the method according to the invention, as explained hereinafter.

The batter web 9 is fed continuously (step III) by the transport 8 to a pre-baking or first baking station in the form of an oven 10 heated at 150-230°C, and held there for 10-15 seconds, whereafter a continuous hot dough sheet 11 will issue from the oven 10 which has a moisture content of 15-30% and a predetermined width.

It should be noted that, because of its relatively high moisture content and its temperature at the oven outlet, said dough sheet 11 is deformable plastically and, therefore, easy to work by hand or mechanically at no risk for its integrity.

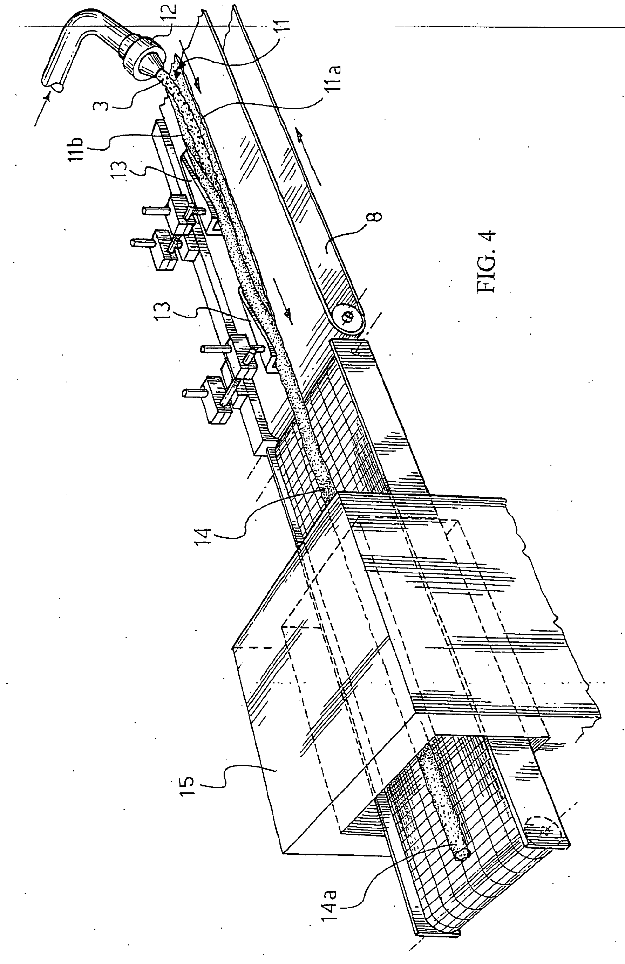

A selected anhydrous filling 3 of a creamy consistency is deposited continuously (step IV) onto the hot dough sheet 11 as this emerges from the oven 10 (Figure 4) using a doctoring device 12, known per se. Said filling 3 is laid lengthwise onto the dough sheet 11 to a smaller width than the sheet, so that two edge laps 11a, 11b are left uncovered by the filling on the dough sheet 11. Provided downstream of the doctoring device 12 is an upturning means 13, e.g. a stationary share or a rotary cone lapper, arranged to act on one side of said hot sheet 11 and upturn its corresponding edge lap 11b (step V) to vault it over the creamy filling 3 deposited on the dough sheet, thereby to form a substantially cylindrical, continuous tubular envelope 14 enfolding said filling 3.

At this stage (Figure 4), the resulting filled tubular envelope 14 is fed continuously (step VI), while still hot and plastically deformable, by the moving transport 8 to a quick-baking oven 15 (second baking) at 150-250°C for a residence time of 15-30 seconds, whereafter a filled tubular blank 14a will issue from said oven in which the envelope has a moisture content of 2.8-8%, as is typical of traditional wafer.

A radio-frequency oven is preferred for the second-baking oven 15.

Upon exiting the oven 15 (step VII), said filled tubular blank 14a is cut ultrasonically, while still hot, into a succession of cuttings, which are then cooled (step VIII) through a specially provided tunnel to form the bakery products 1 according to the method of this invention and forwarded to a packaging station.

Upon cooling, as the temperature of the blank cuttings 14a drops below the so-called "glass transition" temperature, the envelope of each such cuttings takes the same crispness and friability as traditional wafers.

It should be noted that, before the above cooling step, and preferably before the cutting step, the filled tubular blank 14a is deformable plastically to a degree because still hot, so that it may optionally be further shaped overall, e.g. given a slightly flattened near-parallelepipedic shape under a suitable amount of pressure, or be slightly bent to a large radius, or the like.

### EXAMPLE

A wafer-batter was prepared by loading 25 to 35 g wheat flour, 10-20 g sugar, 4-8 g powder milk (or milk serum), 0.5-2 g vegetable fat, 4-8 g glucose syrup, 2-5 g cocoa, 0.05-0.2 g soy lecitin, and 30-40 g water into a planetary mixer.

An anhydrous cream containing particulate cereal matter 4, such as rice, wheat, sugar, malt, or the like, was prepared separately in a suitable blender. The anhydrous cream comprises sugar, vegetable oil, cocoa, hazelnut paste, skimmed powder milk, and soy lecitin, and has an Eta viscosity of 1000 to 2500 mPa/ s at 35°C.

Preferably, the cream/particulate ratio is in the range of 80/20 to 90/10, better still of 85/ 15.

The batter was deposited onto an oven bedplate as a thin layer to form a continuous web of wafer-batter having a thickness of 1.2 mm. The web was then baked (pre-baked) in the oven at 170°C for about 20 seconds.

Onto the thus obtained dough sheet issuing from the oven substantially at the same temperature it had within the oven and with a moisture content of about 27%, a continuous strand of said anhydrous cream was laid, and the dough sheet rolled up to enfold the cream, thereby providing a filled tubular envelope. By a second baking step, at 190°C for about 18 seconds (full baking), the moisture content of the envelope of dough sheet was brought down to 3.5%. The end product, obtained by cooling and cutting up said envelope into cuttings of selected lengths (100 mm), had a weight of 25 g (the weight of the wafer envelope was 5 g and that of the creamy filling 20 g), and an apparent density of 0.52-0.54 g/cm³.

The method of this invention yields filled bakery products, wherein:
- the tubular envelope is crisp and friable same as a traditional wafer, and can be fashioned to any desired overall size and shape, e.g. a so-called pocket size;
- the anhydrous creamy filling can vary in amount and quality within a wide range;
- the filling operation is carried out in a simple repetitive manner and can be automated to ensure that the filling spreads optimally inside the end product, this being done without jeopardizing the envelope integrity because the process is carried out ahead of the baking.

Changes and modifications can be made unto the invention described hereinabove. For example, the tubular envelope could be cut into a succession of cuttings of predetermined lengths before the second-baking step, the latter being designed to make the inventive product as crisp as desired. In addition, the cutting can be performed using a suitably constructed, sized and driven knife. In some cases, a water blade has proved advantageous.

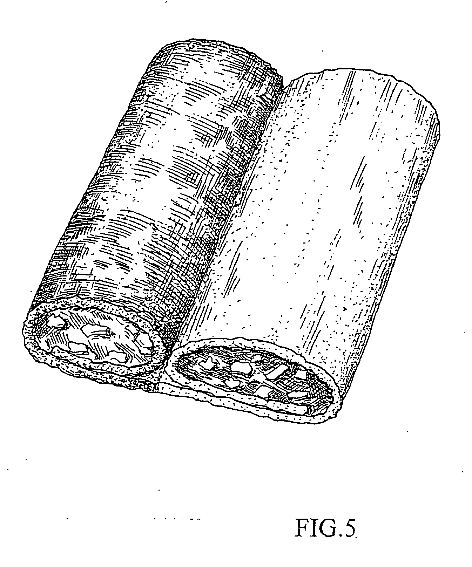

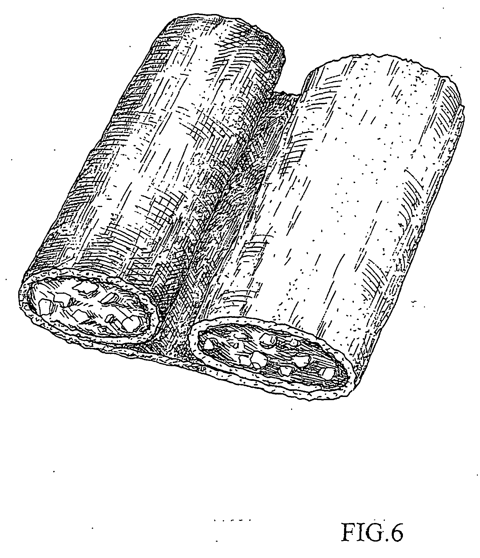

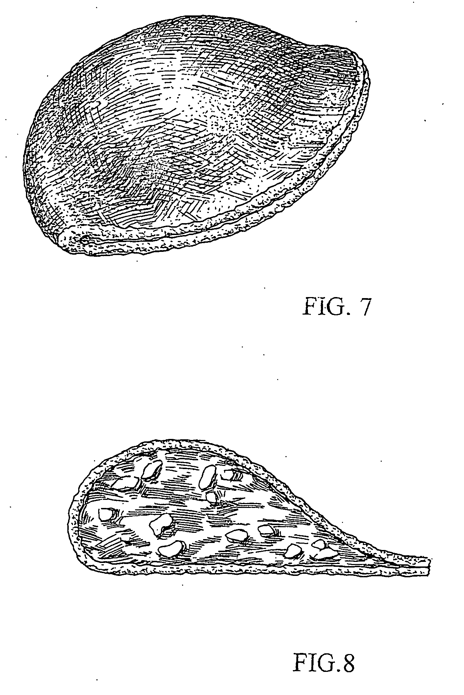

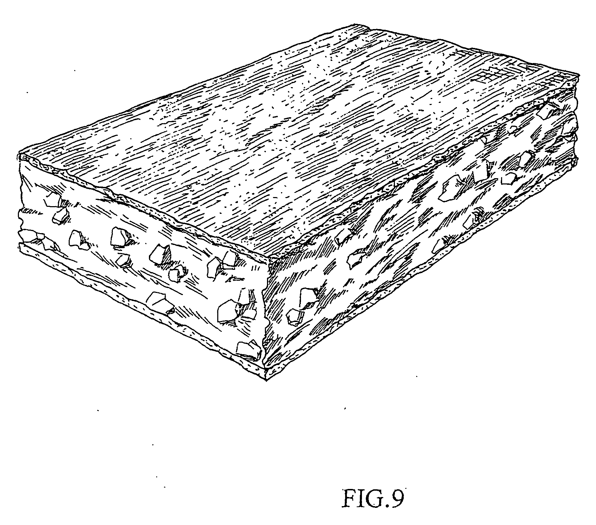

Furthermore, as mentioned in the foregoing description, the method of this invention can yield filled bakery products in a variety of configurations on an industrial scale, yet within the protection scope of the appended claims. For example, "double tubular" products, as shown in Figures 5 and 6, could be provided with envelope of different "colors" arranged to lie parallel in side-by-side or spaced-apart relationship, or "tortello-shaped" products as shown in Figures 7 and 8, and sandwich-shaped ones as shown in Figure 9, also are viable.

## Claims

1. A method of producing filled bakery products, comprising a wafer-like crisp envelope and a creamy filling, on an industrial scale, the method comprising the steps of:
a) spreading a wafer batter into a layer (9) 0.5 to 5 mm thick, and adjusting its moisture content to 15-30%, thereby obtaining a corresponding dough sheet (11) that is plastically deformable and can be processed mechanically;
b) associating a filling (3) of creamy consistency with said dough sheet (11);
c) shaping said sheet (11) into a plastically deformable envelope (14) adapted to enfold and retain said filling (3);
d) baking said envelope (14) and its filling (3) in an oven at 150-250°C for 15-30 seconds to provide a filled bakery product (1) whose envelope (2) of baked dough sheet has a moisture content of 3-8%, being typical of wafers, and upon cooling becomes as crisp and crunchy as a wafer.

2. A method according to Claim 1, **characterized in that** said dough sheet (11) is provided by heating/baking said batter layer (9) in an oven to bring it down to a moisture content of 15-30%.

3. A method according to Claim 2, **characterized in that** said filling (3) comprises an anhydrous cream.

4. A method according to Claim 3, **characterized in that** said anhydrous cream incorporates granulate ingredients (4) such as hazel nuts, almond, and the like.

5. A method according to claim 1 comprising the steps of:
a) continuously forming a thin layer of a wafer batter into a continuous web 0.5 to 5 mm thick;
b) baking said continuous batter web (9) to provide a plastically deformable, continuous dough sheet (11) of predetermined width having a moisture content of 15-30%;
c) continuously depositing a filling (3) of creamy consistency onto said plastically deformable dough sheet (11), with said filling being laid lengthwise thereon to a smaller width than the width of said dough sheet such that at least one edge lap (11 a,11b) of the dough sheet (11) is left uncovered by said filling (3);
d) rolling up said dough sheet (11) into a continuous tubular envelope (14) enfolding said filling (3) by continually upturning said at least one edge lap (11a,11 b) and vaulting it over said filling (3);
e) further baking said envelope (14) and the filling (3) therein in an oven at 150-250°C for 15-30 seconds, to provide a tubular filled blank (14a) of substantially cylindrical shape in which the envelope (2) has a moisture content of 3-8%, as is typical of wafers;
f) cutting said blank (14a) across to obtain blank cuttings of predetermined length that form said filled bakery products.

6. A method according to Claim 5, **characterized in that** said batter is deposited as a thin layer onto a transport (8) adapted to move it through subsequent processing stations.

7. A method according to Claim 5, **characterized in that** the dough sheet (11) is rolled into said continuous tubular wrap (14) by conventional stationary shares (13) or rotary cone lappers acting on at least one side of said dough sheet (11) to continually upturn the corresponding edge lap (11a,11b) thereof, and vaulting it over said filling (3) to contact the opposite edge lap (11a, 11b).

8. A method according to Claim 5, **characterized in that** said cutting up operation is performed ultrasonically.

9. A method according to Claim 5, **characterized in that** said cutting up operation is performed using a water blade.

## Patentansprüche

1. Verfahren zur in industriellem Maßstab stattfindenden Herstellung von gefüllten Backwarenerzeugnissen, mit einer hauchdünnen oder waffelartigen, knusprigen Umhüllung und einer cremigen Füllung, wobei das Verfahren folgende Schritte umfasst:
a) Ausbreiten einer Waffelrührmasse in einer 0,5 bis 5 mm dicken Schicht (9), und Einstellen ihres Feuchtigkeitsgehalts auf 15 bis 30 %, wodurch eine entsprechende Teiglage (11) erhalten wird, die plastisch verformbar ist und mechanisch weiterverarbeitet werden kann;
b) Anordnen einer Füllung (3) mit cremiger Konsistenz an der Teiglage (11);
c) Formen der Lage (11) zu einer plastisch verformbaren Umhüllung (14), die dazu ausgelegt ist, die Füllung (3) einzuschließen und zu behalten;
d) 15 bis 30 Sekunden währendes Ausbacken der Umhüllung (14) und ihrer Füllung (3) in einem Ofen bei 150 bis 250 °C, um ein gefülltes Backwarenerzeugnis (1) bereitzustellen, dessen Umhüllung (2) aus einer ausgebackenen Teiglage einen Feuchtigkeitsgehalt von 3 bis 8 % hat, was typisch für Waffeln ist, und die beim Auskühlen so knusprig und kross wie eine Waffel wird.

2. Verfahren nach Anspruch 1, **dadurch gekennzeichnet, dass** die Teiglage (11) bereitgestellt wird, indem die Rührmassenschicht (9) in einem Ofen erwärmt/ausgebacken wird, um sie auf einen Feuchtigkeitsgehalt von 15 bis 30 % herunterzubringen.

3. Verfahren nach Anspruch 2, **dadurch gekennzeichnet, dass** die Füllung (3) eine wasserfreie Creme umfasst.

4. Verfahren nach Anspruch 3, **dadurch gekennzeichnet, dass** in der wasserfreien Creme körnige Zutaten (4) wie Haselnüsse, Mandeln und dgl. enthalten sind.

5. Verfahren nach Anspruch 1, mit den folgenden Schritten:
a) kontinuierliches Bilden einer dünnen Schicht einer Waffelrührmasse zu einer durchgehenden, 0,5 bis 5 mm dicken Bahn;
b) Ausbacken der durchgehenden Rührmassenbahn (9), um eine plastisch verformbare, durchgehende Teiglage (11) vorbestimmter Breite mit einem Feuchtigkeitsgehalt von 15 bis 30 % bereitzustellen;
c) kontinuierliches Auflegen einer Füllung (3) cremiger Konsistenz auf die plastisch verformbare Teiglage (11), wobei die Füllung in Längsrichtung darauf in einer Breite aufgelegt wird, die geringer ist als die Breite der Teiglage, so dass zumindest ein Überlappungsstreifen (11a, 11b) der Teiglage (11) von der Füllung (3) nicht überdeckt wird;
d) Zusammenrollen der Teiglage (11) zu einer durchgehenden rohrförmigen Umhüllung (14), in der die Füllung (3) eingeschlossen ist, indem der wenigstens eine Überlappungsstreifen (11a, 11b) kontinuierlich umgeschlagen wird und man ihn sich über die Füllung (3) wölben lässt;
e) 15 bis 30 Sekunden währendes, weiteres Ausbacken der Umhüllung (14) und der darin befindlichen Füllung (3) in einem Ofen bei 150 bis 250°C, um einen rohrförmigen, gefüllten Formling (14a) von im Wesentlichen zylindrischer Form bereitzustellen, bei dem die Umhüllung (2) einen Feuchtigkeitsgehalt von 3 bis 8 % hat, wie es typisch für Waffeln ist;
f) Zerschneiden des Formlings (14a), um Zuschnitte des Formlings in vorbestimmter Länge zu erhalten, die die gefüllten Backwarenerzeugnisse bilden.

6. Verfahren nach Anspruch 5, **dadurch gekennzeichnet, dass** die Rührmasse als dünne Schicht auf ein Transportband (8) aufgelegt wird, das dazu ausgelegt ist, sie durch aufeinander folgende Bearbeitungsstationen hindurchzubewegen.

7. Verfahren nach Anspruch 5, **dadurch gekennzeichnet, dass** die Teiglage (11) zu der durchgehenden rohrförmigen Umhüllung (14) durch herkömmliche feststehende Formgebungselemente (13) oder sich drehende kegelartige Überlappungseinrichtungen gerollt wird, die auf wenigstens eine Seite der Teiglage (11) einwirken, um deren entsprechenden Überlappungsstreifen (11a, 11b) kontinuierlich umzuschlagen, und indem man ihn sich so über die Füllung (3) wölben lässt, dass er den entgegengesetzten Überlappungsstreifen (11a, 11b) berührt.

8. Verfahren nach Anspruch 5, **dadurch gekennzeichnet, dass** der Vorgang des Zerschneidens mittels Ultraschall vonstatten geht.

9. Verfahren nach Anspruch 5, **dadurch gekennzeichnet, dass** der Vorgang des Zerschneidens mittels Wasserstrahl vonstatten geht.

## Revendications

1. Procédé de production de produits de boulangerie fourrés, comprenant une enveloppe croustillante de type gaufrette et une garniture crémeuse, à une échelle industrielle, le procédé comprenant les étapes consistant à :
a) étaler une pâte à frire pour gaufrettes de manière à former une couche (9) de 0,5 à 5 mm d'épaisseur, et à ajuster sa teneur en eau pour qu'elle varie de 15 à 30 %, en obtenant ainsi un feuillet de pâte (11) correspondant qui est déformable de manière élastique et qui peut être traité de manière mécanique ;
b) associer une garniture (3) de consistance crémeuse audit feuillet de pâte (11) ;
c) former ledit feuillet (11) de manière à former une enveloppe (14) déformable de manière élastique adaptée pour envelopper et contenir ladite garniture (3) ;
d) cuire ladite enveloppe (14) et sa garniture (3) dans un four à une température variant de 150 à 250°C pendant 15 à 30 secondes de manière à produire un produit de boulangerie fourré (1) dont l'enveloppe (2) de feuillet de pâte cuit présente une teneur en eau qui varie de 3 à 8 %, typique des gaufrettes, et qui, au moment du refroidissement, devient aussi croustillante et croquante qu'une gaufrette.

2. Procédé selon la revendication 1, **caractérisé en ce que** ledit feuillet de pâte (11) est produit en chauffant/cuisant ladite couche (9) de pâte à frire dans un four pour l'amener à une teneur en eau qui varie de 15 à 30 %.

3. Procédé selon la revendication 2, **caractérisé en ce que** ladite garniture (3) comprend une crème anhydre.

4. Procédé selon la revendication 3, **caractérisé en ce que** ladite crème anhydre comprend des ingrédients granuleux (4) comme des noisettes, des amandes, et similaires.

5. Procédé selon la revendication 1, comprenant les étapes consistant à :
a) former en continu une mince couche de pâte à frire pour gaufrettes de manière à produire une bande continue de 0,5 à 5 mm d'épaisseur ;
b) cuire ladite bande continue (9) de pâte à frire de manière à produire un feuillet de pâte continu (11) déformable de manière élastique de largeur prédéterminée et présentant une teneur en eau qui varie de 15 à 30 % ;
c) déposer en continu une garniture (3) de consistance crémeuse sur ledit feuillet de pâte (11) déformable de manière élastique, ladite garniture y étant déposée dans le sens de la longueur sur une largeur inférieure à la largeur dudit feuillet de pâte de telle sorte qu'au moins un bord latéral (11a, 11b) du feuillet de pâte (11) soit laissé découvert par ladite garniture (3) ;
d) rouler ledit feuillet de pâte (11) de manière à former une enveloppe tubulaire continue (14) enveloppant ladite garniture (3) en retournant continuellement ledit au moins un bord latéral (11a, 11b) et en recouvrant ladite garniture (3) ;
e) cuire plus longtemps ladite enveloppe (14) et la garniture (3) qu'elle contient dans un four à une température variant de 150 à 250°C pendant 15 à 30 secondes, de manière à produire une ébauche tubulaire remplie (14a) de forme sensiblement cylindrique dans laquelle l'enveloppe (2) présente une teneur en eau qui varie de 3 à 8 %, teneur en eau typique des gaufrettes ;
f) découper ladite ébauche (14a) de manière à obtenir des découpes d'ébauche de longueur prédéterminée qui forment lesdits produits de boulangerie fourrés.

6. Procédé selon la revendication 5, **caractérisé en ce que** ladite pâte à frire est déposée sous la forme d'une mince couche sur un moyen de transport (8) adapté pour la déplacer à travers des stations de traitement ultérieures.

7. Procédé selon la revendication 5, **caractérisé en ce que** le feuillet de pâte (11) est enroulé de manière à produire ladite enveloppe tubulaire continue (14) par des socs (13) fixes classiques ou des nappeuses coniques rotatives agissant sur au moins un côté dudit feuillet de pâte (11) afin de retourner continuellement le bord latéral (11a, 11b) correspondant de celui-ci, et en recouvrant ladite garniture (3) afin de le mettre en contact avec le bord latéral (11a, 11b) opposé.

8. Procédé selon la revendication 5, **caractérisé en ce que** ladite opération de découpe est réalisée par ultrasons.

9. Procédé selon la revendication 5, **caractérisé en ce que** ladite opération de découpe est réalisée à l'aide d'une lame à eau.
